Europäisches Patentamt

European Patent Office

Office européen des brevets

(19)

(11) **EP 0 482 712 B1**

(12) **EUROPÄISCHE PATENTSCHRIFT**

(45) Veröffentlichungstag und Bekanntmachung des Hinweises auf die Patenterteilung:
**02.01.1997 Patentblatt 1997/01**

(51) Int Cl.6: **H04N 1/40**

(21) Anmeldenummer: **91202726.5**

(22) Anmeldetag: **22.10.1991**

(54) **Verfahren zur Dynamikkompression in Röntgenaufnahmen und Vorrichtung zur Durchführung des Verfahrens**

Method for compressing the dynamic range of radiograms and apparatus carrying out the method

Procédé pour la compression du contraste de radiographies et appareil pour la mise en oeuvre du procédé

(84) Benannte Vertragsstaaten:
**DE FR GB**

(30) Priorität: **24.10.1990 DE 4033716**
**05.07.1991 DE 4122264**

(43) Veröffentlichungstag der Anmeldung:
**29.04.1992 Patentblatt 1992/18**

(73) Patentinhaber:
• **Philips Patentverwaltung GmbH**
**22335 Hamburg (DE)**
Benannte Vertragsstaaten:
**DE**
• **Philips Electronics N.V.**
**5621 BA Eindhoven (NL)**
Benannte Vertragsstaaten:
**FR GB**

(72) Erfinder:
• **Maack, Hanns-Ingo**
**W-2000 Norderstedt (DE)**
• **Neitzel, Ulrich, Dr.**
**W-2000 Hamburg 65 (DE)**

(74) Vertreter: **Hartmann, Heinrich, Dipl.-Ing. et al**
**Philips Patentverwaltung GmbH,**
**Röntgenstrasse 24**
**22335 Hamburg (DE)**

(56) Entgegenhaltungen:
**EP-A- 0 252 327**     **DE-A- 3 629 409**
**US-A- 4 310 886**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Dynamikkompression in einer Röntgenaufnahme, deren Bildpunkten digitale Eingangs-Bildwerte zugeordnet sind, sowie eine Vorrichtung zur Durchführung des Verfahrens.

Die in einer Röntgenaufnahme abgebildeten Bereiche eines Objekts weisen häufig sehr große Dichteunterschiede auf. Bei einer Lungenaufnahme beispielsweise besitzen die Wirbelsäule und das Herz für die Röntgenstrahlung eine wesentlich höhere Dichte als das Lungengewebe, d.h. sie absorbieren die Röntgenstrahlung wesentlich stärker. Diese Dichteunterschiede im Objekt führen in dem vom Röntgenbilddetektor umzusetzenden Röntgenstrahlenrelief zu Intensitätsunterschieden bis zu einem Faktor 10.000. Konventionelle Röntgenfilme können einen solchen Dynamikumfang nicht ohne Verlust an lokalen Kontrasten verarbeiten. Da sich das Interesse aber meist auf einen bestimmten Dynamikbereich beschränkt - bei Lungenaufnahmen beispielsweise auf das relativ schwach absorbierende Lungengewebe, werden die Filme konventionell so belichtet und entwickelt, daß dieser Dynamikteilbereich die Filmdynamik voll ausschöpft. Die anderen Dynamikbereiche werden auf dem Film über- oder unterbelichtet wiedergegeben, so daß die dort vorhandenen Feinkontraste verlorengehen.

Modernere Bilddetektoren haben einen weitaus größeren Dynamikumfang, so daß damit auch in den mit einem konventionellen Film nicht erfaßbaren Dynamik-Randbereichen noch bildmäßig verwertbare Daten geliefert werden können. Dazu gehören beispielsweise Photoleiterschichten, vorzugsweise mit Selen, die das Röntgenstrahlenrelief in ein elektrisches Ladungsmuster umsetzen, das mittels eines Ladungssensors abgetastet und Bildpunkt für Bildpunkt in digitale Eingangs-Bildwerte umgesetzt werden kann. Einen vergleichbaren Dynamikumfang haben auch mit Speicherphosphoren beschichtete Platten, die das Röntgenstrahlenrelief latent speichern und die bei Bestrahlung mit einem Laserstrahl Fluoreszenzlicht erzeugen, das der Intensität der Röntgenstrahlung bei der Aufnahme proportional ist. Mittels eines optischen Sensors kann das Fluoreszenzlicht in ein elektrisches Signal umgesetzt werden, das anschließend digitalisiert wird.

Führt man indes die auf diese Weise gewonnenen, den gesamten Dynamikbereich des Objekts erfassenden Eingangs-Bildwerte ohne weitere Verarbeitung einer Wiedergabeeinheit zu, die daraus ein sichtbares Bild erzeugt, dann geht ein großer Teil der noch in den Eingangs-Bildwerten enthaltenen Information verloren, wenn ein Bildcharakter erreicht werden soll, der dem Charakter einer "konventionellen" Röntgenaufnahme entspricht. Man kann diese Informationsverluste in den für die Diagnose weniger relevanten Bereichen zwar vermeiden, indem man die Kontraste in allen Bildbereichen reduziert, jedoch ergibt sich durch diese auch in dem für die Diagnose wichtigen Dichtebereich wirksame Kontrastverringerung ein von einer konventionellen Aufnahme abweichender Bildcharakter; die meisten Ärzte lehnen solche kontrastarmen ("flauen") Bilder ab.

Aus der EP-A-0 158 382 ist ein Verfahren bekannt, bei dem die Röntgenstrahlung vor dem Durchsetzen des Untersuchungsbereichs durch steuerbare Dämpfungselemente so variiert wird, daß die Intensitätsunterschiede hinter dem Untersuchungsbereich und vor dem Bilddetektor weitgehend ausgeglichen sind. In diesem Fall kann auch mit einem konventionellen Röntgenfilm eine Röntgenaufnahme erhalten werden, die (im mittleren Dichtebereich) einerseits den Charakter einer konventionellen Röntgenaufnahme bewahrt, andererseits aber in den helleren und in den dunkleren Bildpartien noch die Wiedergabe von Feinkontrasten ermöglicht.

Aufgabe der vorliegenden Erfindung ist es, ein Verfahren der eingangs genannten Art so auszugestalten, daß vergleichbare Ergebnisse erreicht werden können, ohne die Strahlungsintensität ortsabhängig zu variieren; die Eingangs-Bildwerte der Röntgenaufnahme haben dabei also ihren durch die Dichteunterschiede des Aufnahmeobjekts vorgegebenen Dynamikumfang.

Diese Aufgabe wird erfindungsgemäß dadurch gelöst, daß aus den Eingangs-Bildwerten Tiefpaß-Bildwerte gebildet werden, und daß für jeden Bildpunkt durch Überlagerung des zugehörigen Eingangs-Bildwertes und eines vom zugehörigen Tiefpaßbildwert abhängigen Ausgleichswertes ein Ausgangs-Bildwert derart gebildet wird, daß der Ausgangs-Bildwert bei kleinen Tiefpaß-Bildwerten größer oder bei großen Tiefpaß-Bildwerten kleiner ist als der Eingangs-Bildwert.

Die Tiefpaß-Bildwerte unterscheiden sich von den Eingangs-Bildwerten dadurch, daß die in der Röntgenaufnahme enthaltene Bildinformation von feinen Strukturen eliminiert ist, d.h., daß Komponenten mit hoher Raumfrequenz unterdrückt sind. Durch Überlagerung eines vom jeweiligen Tiefpaß-Bildwert abhängigen Ausgleichswertes wird erreicht, daß die Dynamik der großflächigen, eine niedrige Raumfrequenz aufweisenden (Grob-)Strukturen erheblich eingeschränkt wird. Führt man die Ausgangs-Bildwerte einer Wiedergabeeinheit (beispielsweise einem Laser-Imager) zu, deren Übertragungskennlinie so eingestellt ist, daß sich bei Verarbeitung der Eingangs-Bildwerte ein konventioneller Aufnahmecharakter ergeben würde, dann wird bei geeignetem Verlauf der Ausgleichswerte in dem für die Diagnose relevanten Dichtebereich ebenfalls der Charakter einer konventionellen Aufnahme erhalten, während in dem bzw. den anderen Dichtebereich(en) bei reduziertem Grobkontrast die Feinstrukturen erhalten bleiben. Die hellen Bereiche im Eingangsbild, die zu einer Blendung des Betrachters führen können, werden im so erzeugten Ausgangsbild in Bereiche von nahezu mittlerer Schwärzung überführt, in denen Feinkontraste besser erkennbar sind. Die Erfindung ist nicht nur auf Eingangsbilder der oben genannten modernen Bilddetektoren anwendbar, sondern auch auf Röntgenaufnahmen, die auf andere Weise erzeugt werden, beispielsweise mit einer Bildverstärker-Fernsehkette.

Es sei an dieser Stelle erwähnt, daß aus der DE-B 29 52 422 bereits ein Verfahren bekannt ist, bei dem aus den digitalen Eingangs-Bildwerten einer Röntgenaufnahme Tiefpaß-Bildwerte gebildet werden. Diese Tiefpaß-Bildwerte werden von den Eingangs-Bildwerten subtrahiert, so daß als Differenz ein Hochpaßbild entsteht. Dieses Hochpaßbild wird zu dem Originalbild - gegebenenfalls nach einer Multiplikation mit einem Faktor, der größer ist als 1 - addiert. Der Effekt dieses sogenannten "Unsharp Masking"-Verfahrens" ist eine Kantenanhebung; eine Dynamikreduktion wird damit weder angestrebt noch erreicht.

Weiterhin ist aus der DE-A- 36 29 409 ein Verfahren zur Kontrastbewertung bei der elektronischen Bildverarbeitung bekannt. Dabei werden die Bildsignale einer Tiefpaßfilterung unterzogen, und zu den resultierenden Tiefpaßsignalen werden Hochpaßsignale addiert, die entsprechend einer nichtlinearen Übertragungskennlinie in der Weise vorgegeben sind, daß kleine Signale höher verstärkt werden als große Signale. Eine Dynamikkompression ist damit nicht möglich.

Eine Weiterbildung der Erfindung sieht vor, daß eine die Abhängigkeit der Ausgleichswerte von den Tiefpaß-Bildwerten darstellende Ausgleichsfunktion in einem Tabellenspeicher gespeichert wird und daß aus dem Tabellenspeicher für jeden Tiefpaß-Bildwert ein Ausgleichswert ausgelesen wird. Damit ist es möglich, bei vorgegebenen Tiefpaß-Bildwerten den einzelnen Bildpunkten einer Röntgenaufnahme sehr schnell den zugehörigen Ausgleichswert zuzuordnen.

In noch weiterer Ausgestaltung ist vorgesehen, daß die Parameter der Ausgleichsfunktion vom Benutzer vorzugsweise interaktiv vorgebbar sind, und daß die Ausgleichsfunktion entsprechend den vorgegebenen Parametern berechnet und in den Tabellenspeicher geladen wird. Damit ist es möglich, die Wirkung der Änderung der Parameter an einem Sichtgerät zu verfolgen. Der Benutzer kann dann die Parameter interaktiv ändern, bis er einen optimalen Bildeindruck gewonnen hat. Dies erlaubt es, anhand der auf dem Bildschirm des Sichtgerätes wiedergegebenen Röntgenaufnahme Befunde zu erheben bzw. Diagnosen zu stellen, was bisher in der sogenannten Projektionsradiographie nicht üblich war.

Die eingangs erwähnten Selen- oder Speicherphosphorschichten, mit deren Hilfe man eine Röntgenaufnahme in digitale elektrische Signale umsetzen kann, haben die Eigenschaft, daß die davon erzeugten Bildsignale linear von der Intensität der Röntgenstrahlung an den verschiedenen Bildpunkten abhängen. Eine für derartige Detektoren geeignete Weiterbildung der Erfindung sieht vor, daß die Eingangs-Bildwerte aus den Bildsignalen durch eine logarithmische Transformation abgeleitet werden. Die aus den von der Intensität linear abhängigen Bildsignale durch die logarithmische Transformation abgeleiteten Eingangs-Bildwerte hängen in guter Näherung linear von der Dichte des Objekts in dem betreffenden Bildpunkt ab. Für in dieser Weise von der Dichte abhängige Eingangs-Bildwerte liefert das erfindungsgemäße Verfahren bessere Resultate als für Eingangsbildwerte, die linear von der Intensität abhängen.

Eine Vorrichtung zur Durchführung des Verfahrens ist gekennzeichnet durch folgende Komponenten

a) einen Bilddetektor zur Umsetzung der ortsabhängigen Strahlungsintensität einer Röntgenaufnahme in ein elektrisches Signal,
b) Mittel zum Ableiten der Eingangs-Bildwerte aus dem Signal,
c) eine Speicheranordnung, deren Speicherkapazität größer ist als zur Speicherung einer Röntgenaufnahme erforderlich,
d) Mittel zur Erzeugung von Tiefpaß-Bildwerten aus den Eingangs-Bildwerten,
e) Mittel zum Ableiten von Ausgleichs-Bildwerten aus den Tiefpaß-Bildwerten,
f) Mittel zum Überlagern der Ausgleichs-Bildwerte und der Eingangs-Bildwerte zur Gewinnung von Ausgangs-Bildwerten, derart daß der Ausgangs-Bildwert bei kleinen Tiefpaß-Bildwerten größer oder bei großen Tiefpaß-Bildwerten kleiner ist als der Eingangs-Bildwert,
g) eine die Röntgenaufnahme entsprechend den Ausgangs-Bildwerten wiedergebenden Wiedergabeeinheit.

Die Erfindung wird nachstehend anhand der Zeichnung näher erläutert. Es zeigen

Fig. 1 ein schematisches Blockschaltbild einer Vorrichtung zur Durchführung des Verfahrens und

Fig. 2 die zeitliche Folge der bei der Bildverarbeitung durchgeführten Operationen,

Fig. 3 den Ablauf der Dynamikkompression.

Fig. 4 verschiedene Kurven, die geeignete Verläufe des Ausgleichs-Bildwertes in Abhängigkeit von dem Tiefpaß-Bildwert zeigen.

Fig. 5 ein schematisches Blockschaltbild für eine interaktive Dynamikkompression.

Fig. 6 eine Kennlinie eines bei der interaktiven Dynamikkompression benutzten Sichtgerätes und

Fig. 6b eine interaktiv eingestellte Ausgleichsfunktion.

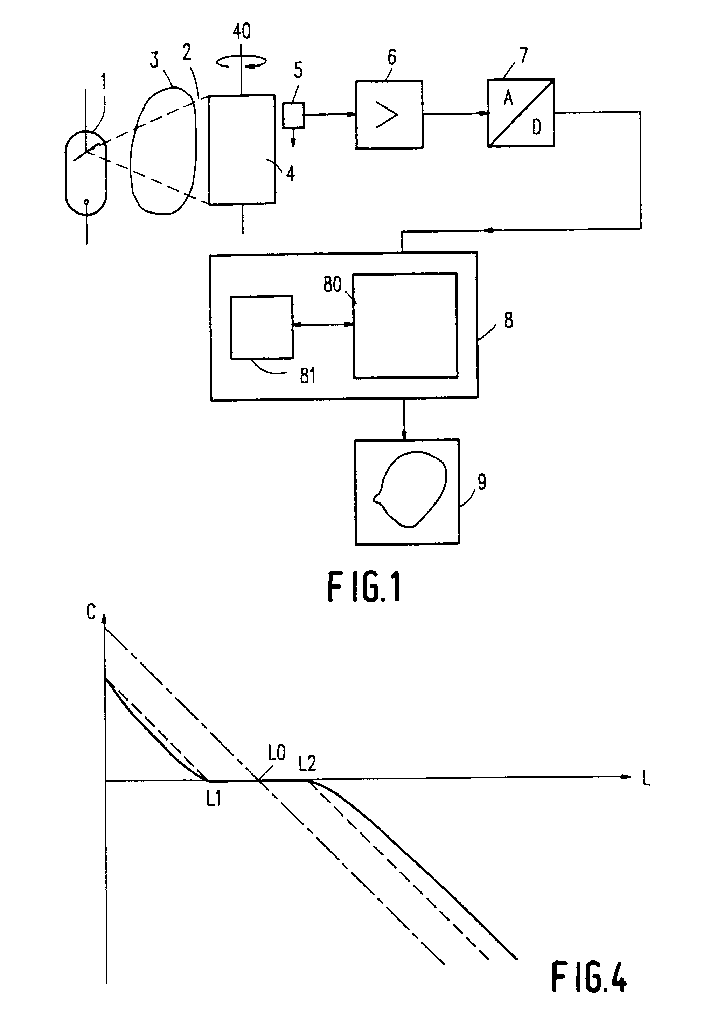

Gemäß Fig. 1 emittiert ein Röntgenstrahler ein Röntgenstrahlenbündel 2, das einen Patienten 3 durchsetzt. Das dabei hinter dem Patienten entstehende Röntgenstrahlenrelief wird von einem Bilddetektor 4,5 in ein elektrisches Signal umgesetzt, dessen zeitlicher Verlauf dem räumlichen Verlauf der Röntgenstrahlung hinter dem Objekt entspricht.

Der Bilddetektor kann z.B. eine zylinderförmige Trommel 4 umfassen, die um eine Achse 40 drehbar ist und mit einem Photoleiter - vorzugsweise Selen - beschichtet ist. Das Röntgenstrahlenbündel 2 muß dann die Form eines Strahlenfächers haben, in dessen Ebene sich die Drehachse 40 befindet. Während einer Röntgenaufnahme dreht sich einerseits die Trommel um die Achse 40 und wird andererseits das fächerförmige Strahlenbündel 2 relativ zum Patienten 3 bewegt, so daß im Laufe einer Röntgenaufnahme ein zweidimensionaler Bereich des Patienten auf der Trommeloberfläche abgebildet wird. Durch die Röntgenstrahlung wird auf der Trommel 4 ein Ladungsmuster erzeugt, das mit Hilfe eines geeigneten Sensors 5, der parallel zur Drehachse 40 verschiebbar angeordnet ist, in ein elektrisches Signal umgesetzt wird. Bezüglich weiterer Einzelheiten dieses Bilddetektors wird auf die EP-PS 219 897 verwiesen.

Es können auch andere Bilddetektoren verwendet werden. Wesentlich ist nur, daß der Bilddetektor ein elektrisches Signal (oder mehrere elektrische Signale) liefert, dessen bzw. deren zeitlicher Verlauf von dem räumlichen Verlauf der Intensität der Röntgenstrahlung hinter dem Objekt in irgendeiner Weise abhängt.

Das Ausgangssignal des Sensors 5 wird einem Verstärker 6 zugeführt und danach in einem Analog-Digital-Wandler 7 in eine Folge von z.B. 16 Bit breiten Datenworten umgesetzt. Diese Daten werden einem Bildprozessor 8 zugeführt, der einen Bildverarbeitungsrechner 80 umfassen kann, der mit einem Halbleiterspeicher 81 zusammenwirkt, dessen Speicherkapazität größer ist als zur Aufnahme einer Röntgenaufnahme erforderlich. Der Bildprozessor 8 führt eine Reihe von Verarbeitungsschritten durch, u.a. eine Dynamikkompression der vom Analog-Digital-Wandler gelieferten Signale. Dadurch wird es möglich, die Röntgenaufnahme auf einer Wiedergabeeinheit 9 auszugeben, ohne daß die Feinkontraste in den dunklen oder hellen Bildpartien verlorengehen. Die Wiedergabeeinheit kann durch einen Monitor gebildet werden oder durch einen Laser-Imager, der aus den Ausgangssignalen des Bildprozessors ein Filmbild erzeugt.

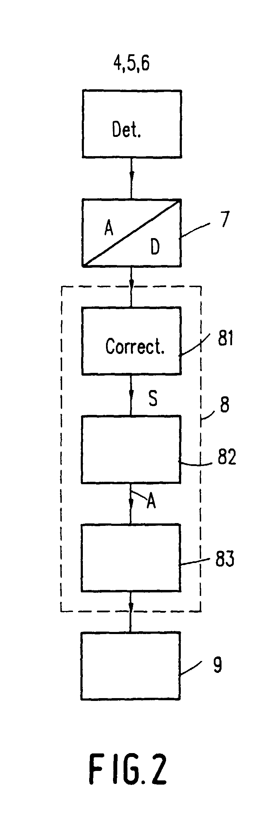

In Fig. 2 ist die zeitliche Folge von verschiedenen Bildverarbeitungsschritten im Bildprozessor 8 dargestellt. Nach der Analog-Digital-Wandlung wird zunächst ein Bildkorrekturverfahren (Block 81) durchgeführt, das dazu dient, detektorspezifische Fehler zu beseitigen. Solche Fehler können dadurch bedingt sein, daß schon während der Abtastung der Ladung auf der Oberfläche der Selentrommel durch den Sensor 5 eine Selbstentladung stattfindet. Wenn der Sensor mehrere Elemente enthält, die gleichzeitig und an verschiedenen Stellen die Trommeloberfläche abtasten, können durch Empfindlichkeitsunterschiede und Empfindlichkeitsschwankungen weitere Fehler entstehen. Korrekturverfahren für derartige Bildfehler sind an sich bekannt, so daß darauf nicht näher eingegangen werden muß. Bei Verwendung anderer Bilddetektoren müssen andere Korrekturverfahren eingesetzt werden. Das Ergebnis dieser Korrekturverfahren ist ein Datensatz S, der im Idealfall von sämtlichen Detektorfehlern befreit ist.

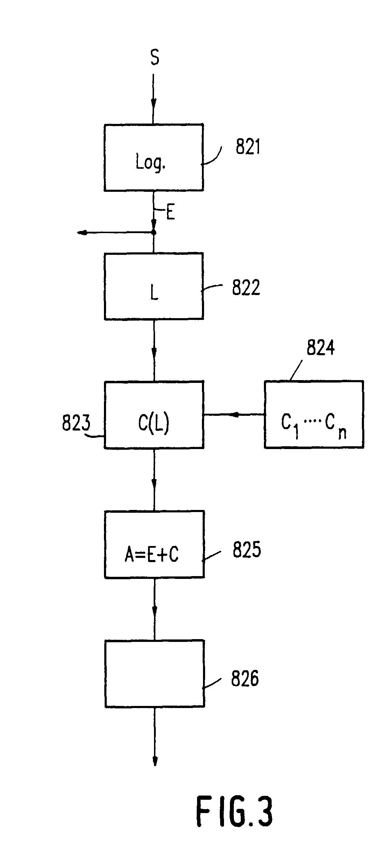

Anschließend werden die so gewonnenen Bilddaten einer Dynamikkompression unterzogen (Block 82), worauf noch in Verbindung mit Fig. 3 näher eingegangen wird. Die in dieser Weise in ihrer Dynamik komprimierten Bilddaten A können dann noch weiteren Verarbeitungsschritten unterzogen werden (Block 83), beispielsweise einem Kantenanhebungsverfahren bzw. einer Anpassung an die Wiedergabeeinheit 9.

Die durch den Block 82 repräsentierte Verarbeitung enthält gemäß Fig. 3 zunächst eine logarithmische Transformation (Block 821), durch die die korrigierten Bilddaten S, die linear von der Intensität der Röntgenstrahlen abhängen, in Daten E transformiert werden, die zumindest näherungsweise linear von der Dichte des Objekts an den verschiedenen Bildpunkten abhängen. Diese Transformation kann entfallen, wenn der Bilddetektor von sich aus bereits Daten liefert, die linear mit der Dichte zusammenhängen.

Die logarithmische Transformation erfolgt entsprechend der Beziehung

$$E = Emax * \log(Smax/S)/\log(Smax). \qquad (1)$$

Dabei ist Smax der größtmögliche vom Bilddetektor gelieferte Wert, beispielsweise 30.000. Emax entspricht dem größtmöglichen Wert im Dichtebild und wird auf eine sehr große, im Rechner noch darstellbare ganze Zahl gesetzt, z.B. 32.000. Gemäß Gleichung 1 ergibt sich für S=Smax der Wert E=O und für den kleinsten Wert S=1 der Wert E=Emax. Bei dieser Wahl der Transformationsparameter findet also keine Dynamikkompression statt. Zweckmäßigerweise wird die logarithmische Transformation mit Hilfe eines Tabellenspeichers (lookup-table) durchgeführt, der die Bilddaten S als Adressen interpretiert, unter denen die Werte E gemäß Gleichung 1 gespeichert sind. Die aus den Werten S durch logarithmische Transformation erzeugten Werte werden nachfolgend als Eingangs-Bildwerte bezeichnet. Sie entsprechen der Dichte der von Fehlern befreiten Röntgenaufnahme an den verschiedenen Bildpunkten. Diese Bildwerte können, wie durch einen Pfeil angedeutet, einem externen Speicher, z.B. einem Diskettenspeicher, zugeführt werden. - Grundsätzlich kann die logarithmische Transformation aber auch erfolgen, bevor die digitalen Bilddaten S erzeugt werden, also im analogen Bereich. Dazu kann ein logarithmischer Verstärker dienen; der Block 821 kann dann entfallen.

Als nächster Schritt erfolgt eine Tiefpaßfilterung des aus den Eingangsbildwerten zusammengesetzten Eingangs-Bildes (Block 822). Dabei wird in bekannter Weise die Summe der Eingangs-Bildwerte E gebildet, die den Bildpunkten zugeordnet ist, die in einem vorzugsweise quadratischen Teilbereich der Röntgenaufnahme, dem Kernel, liegen. Die so gebildete Summe wird durch die Zahl der Eingangs-Bildwerte in dem Kernel dividiert und dem Bildpunkt in der Mitte des Kernels als Tiefpaß-Bildwert L zugeordnet. Dieser stellt somit das arithmetische Mittel der Eingangs-Bildwerte in dem Kernel um den Bildpunkt dar. Das Verfahren wird für andere Bildpunkte wiederholt, wobei sich in bekannter Weise der Tiefpaß-Bildwert für einen in Zeilenrichtung benachbarten Bildpunkt dadurch ergibt, daß zu dem Kernel auf der einen Seite eine Spalte von Bildpunkten hinzugenommen und auf der anderen Seite eine Spalte von Bildpunkten weggenommen wird. Die Größe des Kernels sollte dabei deutlich größer sein als die für die medizinische Diagnose relevanten Feinstrukturen und z.B. einer Fläche von 3 x 3 cm entsprechen.

Für jeden Bildpunkt unterscheidet sich der Eingangs-Bildwert E von dem so gebildeten Tiefpaß-Bildwert L durch einen Wert H, der von der Intensitätsverteilung der Röntgenaufnahme in dem betreffenden Bildpunkt und seiner Umgebung abhängig ist, so daß die Beziehung gilt

$$E = L + H \qquad (2)$$

Der Wert H repräsentiert die höhere Ortsfrequenzkomponente des Eingangsbildwertes E, bzw. aus den Werten H aller Bildpunkte würde sich ein nur die Feinstrukturen enthaltendes Hochpaßbild ergeben.

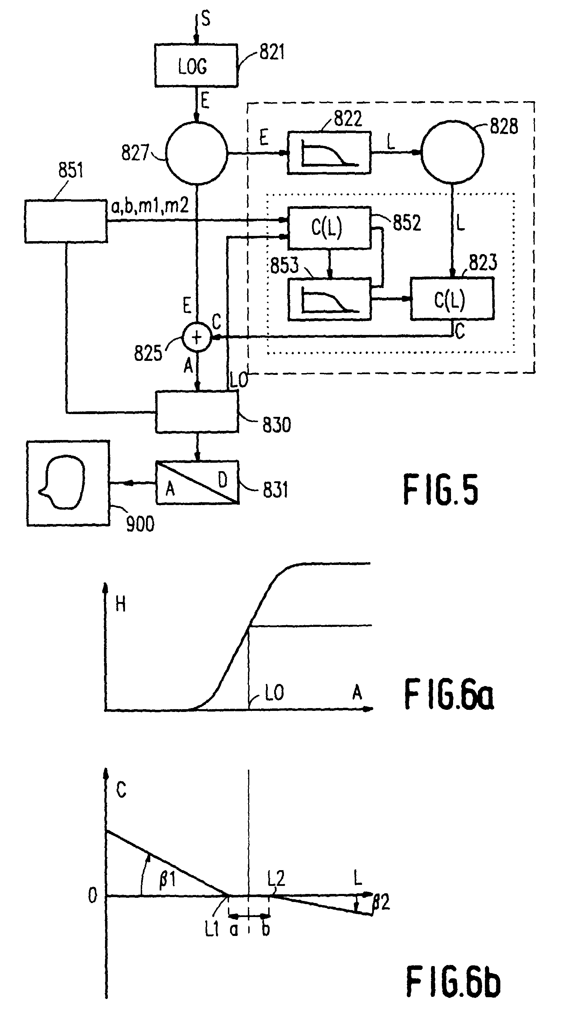

Anschließend erfolgt eine Operation (Blöcke 823.. 825), durch die die Dynamik lediglich des Tiefpaßbildes zumindest in Teilbereichen komprimiert wird. Dabei wird für jeden Bildpunkt ein vom Tiefpaß-Bildwert L abhängiger Ausgleichswert C ermittelt und dem Eingangs-Bildwert E überlagert, wobei die Ausgleichswerte so gewählt werden sollen, daß in dem Ausgangsbild die Dynamik der großflächigen Strukturen in dem für die Diagnose wichtigen Bereich möglichst wenig beeinflußt werden, während sie in den anderen Dichtebereichen, die für die Diagnosen nur von sekundärem Interesse sind, komprimiert wird. Zur Erläuterung sei auf Figur 4 verwiesen, die die Ausgleichsfunktion, d.h. die Abhängigkeit der Ausgleichswerte C von den Tiefpaß-Bildwerten L darstellt, wobei der Abbildungsmaßstab für die C-Werte doppelt so groß ist wie für die L-Werte.

Es sei angenommen, daß z.B. für Lungenaufnahmen der für die Diagnose relevante Dichtebereich zwischen den Werten L1 und L2 liegt. Diese Werte können durch eine Histogramm-Analyse verschiedener Lungenaufnahmen ermittelt werden und betragen z.B. L1 = 5.000 und L2 = 10.000. In dem Dichtebereich zwischen L1 und L2 soll möglichst keine Kompression erfolgen. Dies wird dadurch erreicht, daß für diesen für die Diagnose primär interessierenden Bereich die Ausgleichswerte C = 0 gesetzt werden.

Unterhalb des unteren Grenzwertes L1 soll der Wert C positiv sein (falls die Ausgangs-Bildwerte durch Addition von E und C gebildet werden). Die Ausgleichswerte sollen dort umso größer sein, je größer die Differenz zwischen der unteren Grenze L1 und dem jeweiligen Wert L ist. Jedoch darf die Differenz L1-L nicht kleiner sein als der zu L gehörige Wert C, damit nicht die Dichteverhältnisse invertiert werden. Die in den Punkt L1 einmündende, mit ausgezogener Linie dargestellte Kurve gibt eine geeignete Abhängigkeit des Wertes C von dem Wert L an. Sie läßt sich durch die Gleichung beschreiben:

$$C = x1 * L1 * ((L1-L)/L1)^{y1} \qquad (3)$$

x1 ist dabei ein Faktor, der nicht größer sein sollte als 1, während y1 ein Exponent ist, der nicht kleiner sein sollte als 1. Dem dargestellten Kurvenverlauf liegen die Werte x1 = 0,5 und y1 = 1,2 zugrunde.

Für die Tiefpaß-Bildwerte L, die größer sind als L2, muß C negativ sein, um in diesem Dichtebereich eine Dynamikkompression zu erreichen. Auch in diesem Bereich soll die Kurve einen streng monotonen (fallenden) Verlauf haben, und die Differenz zwischen L und L2 darf nicht kleiner sein als der dem jeweiligen Wert von L zugeordnete Wert von C. Die bei L=L2 beginnende ausgezogene Linie genügt der Beziehung

$$C = x2*(L_2-Emax) * ((L-L2)/(Emax-L2))^{y2} \qquad (4)$$

Auch hier soll x2 nicht größer als 1 sein und y2 nicht kleiner als 1. Der in Fig. 4 dargestellten Kurve liegen die Werte x2=0,5 und y2=1,2 zugrunde.

Vorstehend wurde angenommen, daß für jede Lungenaufnahme die fest vorgegebenen Werte L1 und L2 den für die Diagnose wesentlichen Dichtebereich definieren. Diese Annahme gilt aber nur für in gleicher Weise belichtete Lungenaufnahmen, wie sie mittels eines Belichtungsautomaten hergestellt werden.

Jedoch kann man auch unterschiedlich belichtete Lungenaufnahmen verwenden, wenn die Werte L1 und L2 an die jeweilige Belichtung angepaßt werden. Da eine Änderung der Dosis bei einer Lungenaufnahme lediglich bewirkt, daß sich sämtliche Dichtewerte der Aufnahme um jeweils den gleichen Betrag ändern, muß den vorgegebenen Werten von L1 und L2 zur Anpassung lediglich dieser Betrag überlagert werden, so daß die Differenz zwischen L1 und L2 sich auch nach dieser Anpassung nicht ändert; jedoch kann man L1 und L2 auch unverändert lassen und stattdessen den Betrag mit umgekehrtem Vorzeichen dem Tiefpaßbildwert überlagern. Der Betrag, der dabei zur Anpassung an die unterschiedlichen Belichtungen bzw. unterschiedlichen Patientendicken addiert oder subtrahiert werden muß, läßt sich leicht durch Analyse eines Histogramms ermitteln, das die Häufigkeit der verschiedenen Dichtewerte an den Bildpunkten der betreffenden Aufnahme repräsentiert. In der Praxis bedeutet eine solche Histogrammanalyse keinen zusätzlichen Aufwand, da sie in der Regel aus anderen Gründen ohnehin erforderlich ist, beispielsweise zur Anpassung der Bildwerte an die Übertragungskennlinien der Bildwiedergabeeinheit.

Wenn in den Gleichungen (3) und (4) y1=y2=1 gewählt wird, ergeben sich die durch die gestrichelten Linien dargestellten Kurven, bei der der Verlauf von C durch drei Geradenstücke gebildet wird. Ein gewisser Nachteil dabei sind die beiden Knicks in der Kurve bei L1 und L2. Wie durch eine strichpunktierte Linie angedeutet, kann ein geeigneter Verlauf von C auch durch eine durch die Mitte (bei L0) des für die Diagnose wichtigen Bereichs verlaufende Geraden mit negativer Steigung erzielt werden. Diese Gerade ergibt sich, wenn in den Gleichungen (3) und (4) x1=x2=0,5; y1=y2=1 und L1=L2=L0 gesetzt wird. Daraus resultiert die Gleichung

$$C = x^* (Lo-L) \qquad (5)$$

wobei beispielsweise x=0,5 ist. Hierbei ergibt sich zwar auch in dem für die Diagnose relevanten Dichtebereich zwischen L1 und L2 eine Beeinflussung der Grobkontraste, doch ist diese verhältnismäßig gering.

Die beschriebene Abhängigkeit des Ausgleichswertes führt nach einer Überlagerung mit dem Eingangs-Bildwert gemäß der Beziehung

$$A = E + C \qquad (6)$$

zu einem aus den Ausgangs-Bildwerten gebildeten Ausgangsbild, das für Lungenaufnahmen optimal ist. Das für die Diagnose relevante Lungengewebe wird dabei mit den von konventionellen Aufnahmen gewohnten Grob- und Feinkontrasten wiedergegeben. Hingegen werden in den helleren und dunkleren Bildpartien die großflächigen Grobkontraste verringert, während die Feinkontraste (H) im Ausgangsbild auch in diesen Bereichen erhalten bleiben. Dies erklärt sich dadurch, daß der Ausgangsbildwert A durch eine Summation aus dem Eingangs-Bildwert E gebildet wird, der gemäß Gleichung 2 die Komponente H enthält, die die Feinstrukturen repräsentiert.

Die in Fig. 4 dargestellte Abhängigkeit des Ausgleichswertes C vom Tiefpaß-Bildwert L ist jedoch nicht für alle Röntgenaufnahmen in gleicher Weise geeignet. Bei Knochenaufnahmen beispielsweise sind die Bereiche hoher Dichte von besonderer diagnostischer Relevanz, während die Bereiche niedrigerer Dichte von geringerer diagnostischer Bedeutung sind. Hier muß die Dynamikkompression in dem niedrigeren Dichtebereich erfolgen, während der höhere Dichtebereich unverändert bleiben soll. Zu diesem Zweck muß C zu niedrigeren Dichtewerten hin zunehmen (ähnlich wie der linke, ausgezogene Kurventeil in Fig. 4, jedoch bei einem höheren Dichtewert beginnend), während C in Bereichen hoher Dichte sich nicht wesentlich ändern und - damit der konventionelle Bildcharakter erhalten bleibt - möglichst gleich Null sein soll.

Es ist somit erforderlich, für die Aufnahme unterschiedlicher Organe unterschiedliche Abhängigkeiten der Ausgleichswerte von den Tiefpaß-Bildwerten vorzusehen. In allen Fällen hat aber C als Funktion von L einen monotonen Verlauf, und zwar einen monoton fallenden, wenn nach Gleichung (6) E und C addiert werden und einen monotonen steigenden, falls stattdessen C von E subtrahiert wird.

Zur Durchführung der Dynamikkompression wird - vergl. Block 823 in Fig. 3 - der zu dem jeweiligen Tiefpaß-Bildwert gehörende Ausgleichswert C bestimmt. Am einfachsten erfolgt dies mittels eines Tabellenspeichers, in dem für jede Eingangsadresse - gebildet durch die Tiefpaß-Bildwerte L - ein zugeordneter Ausgleichs-Bildwert C gespeichert ist. Da für die Röntgenaufnahmen von verschiedenen Organen und ggf. auch für unterschiedlich belichtete bzw. von unterschiedlich dicken Patienten erstellte Aufnahme des gleichen Organs verschiedene Abhängigkeiten des Wertes C von L vorhanden sein müssen, muß der für das jeweils aufgenommene Organ zutreffende Verlauf von C zuvor aus einem Speicher geladen werden - ggf. nach vorheriger Berechnung (Block 824).

Anschließend werden zur Bildung von Ausgangs-Bildwerten für jeden Bildpunkt der Eingangs-Bildwert und der zugehörige Ausgleichswert C gemäß Gleichung 6 überlagert. Grundsätzlich wäre es auch möglich, den Wert C von E zu subtrahieren, wenn der Wert C einen zur Achse C=O spiegelbildlichen Verlauf hätte. In dem durch die Ausgangs-Bildwerte A gebildeten Ausgangsbild sind die großflächigen Kontraste verringert - zumindest in den Bereichen, die für die Diagnose nur von sekundärer Bedeutung sind. Da die Feinkontraste aber auch in diesen Bereichen unbeeinflußt bleiben, sind sie im Ausgangsbild noch erkennbar.

Wenn man in den Gleichungen (3) bis (5) den Wert L ersetzt durch F, wobei für F die Beziehung gilt

$$F = (1-u)^*E + u^*L \qquad (7)$$

und u ein vorgebbarer Wert ist, dann ergibt sich in den Bereichen beiderseits des für die Diagnose wesentlichen Dichtebereiches eine Anhebung der Feinkontraste, wenn u größer ist als 1. Für u = 1 wird F = L, und die Feinkontraste werden unverändert beibehalten. Da E näherungsweise dem Wert L entspricht (die Werte H für die Hochpaß- bzw. Feinstrukturen sind in der Regel klein im Vergleich zu den Tiefpaß-Bildwerten L), entspricht F näherungsweise dem Wert L und ist für u = 1 mit diesem identisch.

Obwohl für jeden Bildpunkt in der Röntgenaufnahme ein Eingangs-Bildwert E, ein Tiefpaß-Bildwert L und ein Ausgangs-Bildwert A vorhanden sein muß, ist es nicht erforderlich, gleichzeitig alle diese Werte zu speichern, was drei (Halbleiter-)Bildspeicher erfordern würde. Wenn beispielsweise ein Tiefpaß-Bild mit sämtlichen Werten L berechnet und gespeichert worden ist, können die Eingangs-Bildwerte E oder die Tiefpaß-Bildwerte L nach Ermittlung von C und Addition zu E mit den Ausgangs-bildwerten A überschrieben werden; hierzu wären also nur zwei Bildspeicher erforderlich. Überschreibt man die Werte E, die für das Tiefpaßbild nicht erforderlich sind, oder die bereits berechneten Tiefpaßbildwerte schon vor der vollständigen Berechnung des Tiefpaßbildes, dann kommt man mit einer Speicherkapazität von wenig mehr als zum Speichern eines Bildes erforderlich aus.

Die Ausgangs-Bildwerte können gegebenenfalls noch einer Exponentialtransformation unterzogen werden (Block 826), die die logarithmische Transformation (Block 821) wieder aufhebt; jedoch kann die Exponentialtransformation entfallen.

Vorstehend wurde die erfindungsgemäße Dynamikkompression anhand der Ausgabe einer Röntgenaufnahme mit einer sogenannten hard-copy-Einheit (laserimager) erläutert. Es ist aber auch möglich, die Dynamikkompression bei Wiedergabe der Röntgenaufnahme auf dem Bildschirm eines Sichtgerätes durchzuführen. Sichtgeräte haben einen noch geringeren Dynamikumfang als Einheiten, die die Röntgenaufnahme auf einen Film eingeben. Bei geeigneter Durchführung des Kompressionsverfahrens, d.h., wenn die erforderlichen Rechenvorgänge genügend schnell durchgeführt werden, kann der Untersucher in diesem Fall die Dynamikkompression interaktiv durchführen, so daß die Röntgenaufnahme optimal an den Dynamikumfang des Sichtgerätes angepaßt werden kann. Der Benutzer kann dann schon anhand der auf dem Bildschirm des Sichtgerätes erscheinenden Röntgenaufnahme, also ohne ein gesondertes Filmbild, eine Befundung durchführen bzw. eine Diagnose erstellen. Fig. 5 erläutert diesen interaktiven Prozeß anhand eines schematischen Blockdiagramms, das sich mit einer geeigneten Display-Station realisieren läßt, d.h. einer Station, die außer über ein Sichtgerät über die für die Bildverarbeitung erforderliche Rechner- und Speicherkapazität verfügt.

Gemäß Fig. 5 werden die korrigierten Bilddaten S im Block 821 wiederum einer logarithmischen Transformation unterzogen. Die Bilddaten S können unmittelbar vom Detektor 1..5 stammen (vergl. Fig. 1), sie können aber auch einem externen Speicher entnommen sein. Die nach der logarithmischen Transformation entstehenden Eingangs-Bildwerte E werden in einen ersten Bildspeicher 827 geschrieben.

Nach der noch zu erläuternden, interaktiv ausgeführten Dynamikkompression, bei der die Ausgangs-Bildwerte A erzeugt werden, werden diese einer Grauwerttransformation unterzogen (Block 830) und über einen Digital-Analog-Wandler 831 dem Sichtgerät zugeführt. Die Grauwerttransformation läßt sich am einfachsten mit Hilfe eines Tabellenspeichers realisieren, der jedem Ausgangs-Bildwert A einen digitalen Wert zuordnet, der nach der Digital-Analog-Wandlung zu einem bestimmten Grauwert auf dem Bildschirm des Sichtgerätes 900 führt.

Fig. 6a stellt den Zusammenhang zwischen der Helligkeit H eines Bildpunktes auf dem Sichtgerät und dem Ausgangs-Bildwert A ohne Dynamikkompression dar. Unterhalb eines ersten Ausgangs-Bildwertes ist der Bildpunkt vollständig schwarz und oberhalb eines zweiten Wertes ist der Bildpunkt maximal weiß. Zwischen diesen Werten vollzieht sich die aus Fig. 6a ersichtliche Transformation der Werte A in einen Grauwert.

Mittels einer Eingabeeinheit 851, die ein Track-Ball, eine sogenannte Maus oder eine Tastatur sein kann, lassen sich in einem ersten Bedienungsmodus der Einheit Kontrast und Helligkeit der vorgegebenen Kurve ändern. Eine Helligkeitsänderung bewirkt eine Horizontalverschiebung der Kurve, und eine Kontraständerung beeinflußt die Steigung dieser Kurve. Der Benutzer wählt die Werte von Helligkeit und Kontrast so, daß der für die Diagnose relevante Bereich der Ausgangsbildwerte A in den Übergang zwischen weiß und schwarz liegt. In diesem Fall liegt der Wert A=L0 in dem für die Diagnose wesentlichen Amplitudenbereich.

Insofern als bisher beschrieben entspricht die in Fig. 5 skizzierte Verarbeitung der Bildwerte dem bei einer Displaystation üblichen.

Die Dynamikkompression erfolgt mit den in dem gestrichelt umrahmten Kästchen enthaltenen Verarbeitungsschritten bzw. Komponenten. Die Eingangsbildwerte E werden, wie schon in Verbindung mit Fig. 3 erläutert, einer Tiefpaßfilterung mit festem, vergleichsweise großem Kernel unterzogen. Die dabei erzeugten Tiefpaß-Bildwerte L werden in einem zweiten Bildspeicher 828 gespeichert. Den aus dem zweiten Bildspeicher ausgelesenen Tiefpaß-Bildwerten L wird mittels eines Tabellenspeichers 823, in dem die Ausgleichsfunktion C(L) gespeichert ist, jeweils ein Ausgleichswert zugeordnet, so daß zur Erzielung des Ausgangs-bildwertes A(x,y) für jeden Bildpunkt die Operation

$$A(x,y) = E(x,y) + C(L(x,y)) \qquad (8)$$

durchgeführt wird. Pro Bildpunkt erfordert diese Operation also zwei Speicherzugriffe (auf die Werte E(x,y) und L(x,y) in den Speichern 827, 828), eine Tabellenspeicheroperation und eine Addition (im Block 825). Mit den derzeit üblichen Rechnerleistungen lassen sich diese Operationen aber genügend schnell durchführen.

Die Dynamikkompression läßt sich den Wünschen des Benutzers interaktiv anpassen. Dazu wirkt die Eingabeeinheit 851 in einem weiteren Bedienungsmodus (neben dem Modus für die Einstellung von Kontrast und Helligkeit) mit dem gepunktet umrahmten Block zusammen. Dabei wird davon ausgegangen, daß die Ausgleichsfunktion sich im Prinzip aus drei Geradenstücken zusammensetzt: Das erste Geradenstück für Tiefpaßwerte unterhalb von L1 ist durch den Winkel β1 gekennzeichnet, unter dem dieses Geradenstück zur Horizontalen verläuft. Der Winkel β1 muß kleiner als 45° sein, d.h., die Steigung m1 = tan(β1) muß dem Betrage nach kleiner als 1 sein. Das zweite Geradenstück von L1 bis L2 ist dem für die Diagnose wesentlichen Amplitudenbereich der Eingangswerte zugeordnet. Die Lage dieses Bereichs hängt einerseits von der Belichtung der Röntgenaufnahme und andererseits von dem in der Röntgenaufnahme abgebildeten Organ bzw. Körperbereich ab. Da auch die Helligkeit interaktiv vorgegeben wurde, liegt bereits der Wert L0 vor, der innerhalb des für die Diagnose wesentlichen Amplitudenbereiches liegt. Es müssen dann nur noch die Werte a und b vorgegeben werden, mit denen sich die Endwerte dieses Bereichs wie folgt definieren lassen:

$$L_1 = L0 - a \qquad (9)$$

$$L_2 = L0 + b \qquad (10)$$

Das dritte Geradenstück für Tiefpaß-Bildwerte oberhalb von L2 ist durch den Winkel β2 bzw. die Steigung m2 = tan β2 gekennzeichnet, wobei wiederum m2 dem Betrage nach kleiner als 1 sein muß.

Der Benutzer muß also lediglich noch die Werte a, b, m1 und m2 vorgeben. Diese Parameter können unabhängig voneinander einstellbar sein, etwa durch ein "Anklicken" mit der Maus auf dem Bildschirm anhand einer dort graphisch dargestellten Ausgleichsfunktion. Es ist aber auch möglich, die vier Parameter auf zwei zu reduzieren, wenn a = b und m1 = m2 gesetzt wird. Die zwei dann verbleibenden Parameter können durch eine zweidimensionale Bewegung mit der Maus vorgegeben werden, wobei z.B. die Bewegung in x-Richtung den Parameter a bzw. b verändert, während die Bewegung in y-Richtung den Parameter m1 und m2 ändert. Dies ist ganz analog zu dem Verfahren, mit dem (in einem anderen Betriebsmodus), die Bewegung in x-Richtung die Helligkeit und die Bewegung in y-Richtung den Kontrast steuert.

Die Berechnung der Ausgleichsfunktion erfolgt im Block 852. Für das erste Geradenstück gilt dabei die Beziehung

$$C = m1 * (L-L1). \qquad (11)$$

L1 wird dabei aus L0 und A gemäß Gleichung (9) berechnet. Für das zweite Geradenstück im Bereich von L1 und L2 gilt
C=0, und für das dritte Geradenstück gilt
C=m2 * (L-L2) mit L2=L0+b.
Die Berechnung der Ausgleichsfunktion kann sehr schnell erfolgen, da es sich dabei nur um Geradenstücke handelt, d.h., die Ausgleichsfunktion kann quasi in Echtzeit modifiziert werden, wenn der Benutzer interaktiv die Parameter ändert.

Die Ausgleichsfunktion ist nach der Berechnung noch "eckig", was in manchen Fällen stören kann. Es empfiehlt sich daher, die Folge von Datenworten, die die Ausgleichsfunktion C(L) repräsentiert, einer (eindimensionalen) Tiefpaßfilterung zu unterziehen. Zu diesem Zweck ist der Tiefpaßfilterblock 853 vorgesehen, wobei die Größe des Tiefpaßkörnels zweckmäßigerweise aus der Breite (a+b) des für die Diagnose relevanten Amplitudenbereiches abgeleitet wird und z.B. auf ein Zehntel dieses Wertes gesetzt wird. Wenn beispielsweise L1 = 5000 und L2 = 10.000 beträgt, dann erfolgt die Glättung dadurch, daß über 500 aufeinanderfolgende Werte der Ausgleichsfunktion C(L) gemittelt wird. Die berechnete und geglättete Funktion wird in den Tabellenspeicher 823 geladen, und von da an erfolgt die Kompression entsprechend den neu vorgegebenen Parametern. Diese können dann bei Bedarf erneut geändert werden usw.

**Patentansprüche**

1. Verfahren zur Dynamikkompression in einer Röntgenaufnahme, deren Bildpunkten digitale Eingangs-Bildwerte zugeordnet sind,
   <u>dadurch gekennzeichnet</u>, daß aus den Eingangs-Bildwerten (E) Tiefpaß-Bildwerte (L) gebildet werden, und daß für jeden Bildpunkt durch Überlagerung des zugehörigen Eingangs-Bildwertes (E) und eines vom zugehörigen Tiefpaß-Bildwert (L) abhängigen Ausgleichswertes (C) ein Ausgangs-Bildwert (A) derart gebildet wird, daß der Ausgangs-Bildwert bei kleinen Tiefpaß-Bildwerten (L) größer oder bei großen Tiefpaß-Bildwerten (L) kleiner ist als der Eingangs-Bildwert (E).

2. Verfahren nach Anspruch 1,
   <u>dadurch gekennzeichnet</u>, daß eine die Abhängigkeit der Ausgleichswerte (C) von den Tiefaßbildwerten (L) darstellende Ausgleichsfunktion (C (L)) in einem Tabellenspeicher (823) gespeichert wird und daß aus dem Tabellenspeicher für jeden Tiefpaß-Bildwert (L) ein Ausgleichswert (C) ausgelesen wird.

3. Verfahren nach Anspruch 2
   <u>dadurch gekennzeichnet</u>, daß die Parameter (m1,m2, L1,L2) der Ausgleichsfunktion (C (L)) vom Benutzer vorzugsweise interaktiv vorgebbar sind, und daß die Ausgleichsfunktion entsprechend den vorgegebenen Parametern berechnet (852) und in den Tabellenspeicher (823) geladen wird.

4. Verfahren nach Anspruch 1,

dadurch gekennzeichnet, daß zur Vorgabe der Parameter der Ausgleichfunktion ein Bereich (L1-L2) der Tiefpaß-Bildwerte vorgegeben wird, innerhalb dessen die Ausgleichsfunktion (C (1)) den Wert 0 hat und daß die Steigung (m1, m2) der Ausgleichsfunktion außerhalb dieses Bereichs vorgegeben wird.

5. Verfahren nach einem der vorhergehenden Ansprüche,
dadurch gekennzeichnet, daß die Ausgleichsfunktion einem Glättungsprozeß unterzogen wird.

6. Verfahren nach Anspruch 1 mit einem Bilddetektor, der von der Intensität der Röntgenstrahlung linear abhängige Bildsignale liefert,
dadurch gekennzeichnet, daß die Eingangs-Bildwerte (E) aus den Bildsignalen (S) durch eine logarithmische Transformation (821) abgeleitet werden.

7. Verfahren nach einem der vorherigen Ansprüche,
dadurch gekennzeichnet, daß die Ausgangs-Bildwerte (A) einer Exponentialtransformation unterzogen werden.

8. Vorrichtung zur Dynamikkompression in einer Röntgenaufnahme zur Durchführung des Verfahrens nach Anspruch 1,
gekennzeichnet durch die folgenden Komponenten

a) einem Bilddetektor (4,5) zur Umsetzung der ortsabhängigen Strahlungsintentsität einer Röntgenaufnahme in ein elektrisches Signal,
b) Mittel (7,8; 821) zum Ableiten der Eingangs-Bildwerte (E) aus dem Signal,
c) eine Speicheranordnung (81), deren Speicherkapazität größer ist als zur Speicherung einer Röntgenaufnahme erforderlich,
d) Mittel (8; 822) zur Erzeugung von Tiefpaß-Bildwerten aus den Eingangs-Bildwerten,
e) Mittel (8; 823, 824) zum Ableiten von Ausgleichs-Bildwerten aus den Tiefpaß-Bildwerten,
f) Mittel (8; 825) zum Überlagern der Ausgleichs-Bildwerte und der Eingangs-Bildwerte zur Gewinnung von Ausgangs-Bildwerten (A), derart, daß der Ausgangs-Bildwert bei kleinen Tiefpaß-Bildwerten (L) größer oder bei großen Tiefpaß-Bildwerten (L) kleiner ist als der Eingangs-Bildwert (E),
g) eine die Röntgenaufnahme entsprechend den Ausgangs-Bildwerten (A) wiedergebenden Wiedergabeeinheit (9).

9. Vorrichtung nach Anspruch 8,
dadurch gekennzeichnet, daß die Mittel zum Ableiten der Ausgleichs-Bildwerte einen Tabellenspeicher (823) enthalten, in dem unter den Tiefpaß-Bildwerten (L) zugeordneten Adressen Ausgleichs-Bildwerte (C) gespeichert sind.

**Claims**

1. A method of dynamic compression in an X-ray image, to the pixels of which there are assigned digital input image values,
characterized, in that low-pass image values (L) are formed from the input image values (E) and that for each pixel an output image value (A) is formed by superposing the associated input image value (E) and an equalizing value (C) which depends on the associated low-pass image value (E), in such a manner that the output image value exceeds the input image value for small low-pass image values (L) or is lower than the input image value (E) for high low-pass image values (L).

2. A method as claimed in Claim 1,
characterized, in that an equalizing function (C (L)) which represents the dependence of the equalizing values (C) on the low-pass image values (L) is stored in a look-up table (823) and for each low-pass image value (L) an equalizing value (C) is read from the look-up table.

3. A method as claimed in Claim 2,
characterized, in that the parameters (m1,m2, L1,L2) of the equalizing function (C (L)) can be set, by the user, preferably interactively, and the equalizing function is calculated (852) and stored in the look-up table (823) in correspondence with the preset parameters.

4. A method as claimed in Claim 1,
characterized, in that for the presetting of the parameters of the equalizing function there is preset a range (L1-L2) of the low-pass image values in which the equalizing function (C (1)) has the value 0 and that the slope (m1,m2) of the equalizing function outside this range, is preset.

5. A method as claimed in any one of the preceding Claims,
characterized, in that the equalizing function is subjected to a smoothing procedure.

6. A method as claimed in Claim 1, involving an image detector producing image signals which linearly depend on the intensity of the X-rays,
characterized, in that the input image values (E) are derived from the image signals (S) by logarithmic transformation (821).

7. A method as claimed in any one of the preceding Claims,
characterized, in that the output image values (A) are subjected to an exponential transformation.

8. A device for dynamic compression in an X-ray image in order to carry out the method claimed in Claim 1,
characterized by the following components

a) an image detector (4,5) for converting the location-dependent radiation intensity of an X-ray image into an electric signal,
b) means (7,8; 821) for deriving the input image values (E) from the signal,
c) a storage device (81) whose storage capacity is larger than the capacity required for storing an X-ray image,
d) means (8;822) for producing low-pass image values from the input image values,
e) means (8;823,824) for deriving equalizing image values from the low-pass image values,
f) means (8,825) for superposing the equalizing image values and the input image values in order to recover output image values (A) in such a manner that for small low-pass image values (L) the output image value is larger than and for large low-pass image values (L) smaller than the input image value (E),
g) a display unit (9) displaying the X-ray image in correspondence with the image values (A).

9. A device as claimed in Claim 8,
characterized, in that the means for deriving the equalizing image values include a look-up table (823) in which equalizing image values (C) are stored under the addresses assigned to the low-pass image values (L).

**Revendications**

1. Procédé de compression du contraste de la dynamique d'une radiographie, dont les points d'image sont associés à des valeurs d'image d'entrée numériques,
caractérisé en ce que des valeurs d'image en passe-bas (L) sont formées à partir des valeurs d'image d'entrée (E), et en ce que, pour chaque point d'image, une valeur d'image de sortie (A) est formée par superposition de la valeur d'image d'entrée associée (E) et d'une valeur de compensation (C) qui est fonction de la valeur d'image en passe-bas associée (L), de telle sorte que la valeur d'image de sortie soit, dans le cas de petites valeurs d'image en passe-bas (L) plus grande ou, dans le cas de grandes valeurs d'image en passe-bas (L), plus petite que la valeur d'image d'entrée (E).

2. Procédé suivant la revendication 1,
caractérisé en ce qu'une fonction de compensation (C (L)) représentant la relation donnant les valeurs de compensation (C) en fonction des valeurs d'image en passe-bas (L) est mémorisée dans une mémoire de tables (823) et en ce qu'une valeur de compensation (C) est extraite par lecture de la mémoire de tables pour chaque valeur d'image en passe-bas (L).

3. Procédé suivant la revendication 2,
caractérisé en ce que les paramètres (m1, m2, L1, L2) de la fonction de compensation (C (L)) peuvent être prédéterminés par l'utilisateur de préférence de manière interactive, et en ce que la fonction de compensation est calculée (852) conformément aux paramètres prédéterminés et est chargée dans la mémoire de tables (823).

4. Procédé suivant la revendication 1,
caractérisé en ce que pour la prédétermination des paramètres de la fonction de compensation est prédéterminé un domaine (L1-L2) des valeurs d'image en passe-bas, à l'intérieur duquel la fonction de compensation (C (L)) a la valeur 0 et en ce que la pente (m1, m2) de la fonction de compensation est prédéterminée en dehors de ce domaine.

5. Procédé suivant l'une quelconque des revendications précédentes,
caractérisé en ce que la fonction de compensation est soumise à un processus de lissage.

6. Procédé suivant la revendication 1, avec un détecteur d'image, qui fournit des signaux d'image qui sont une fonction linéaire de l'intensité du rayonnement X,
caractérisé en ce que les valeurs d'image d'entrée (E) sont dérivées des signaux d'image (S) par une transformation logarithmique (821).

7. Procédé suivant l'une quelconque des revendications précédentes,
caractérisé en ce que les valeurs d'image de sortie (A) sont soumises à une transformation exponentielle.

8. Dispositif de compression de la dynamique dans une radiographie destiné à exécuter le procédé suivant la revendication 1,
caractérisé par les éléments suivants :

a) un détecteur d'image (4, 5) pour convertir l'intensité du rayonnement, qui est fonction de l'endroit, d'une radiographie en un signal électrique,
b) des moyens (7, 8; 821) pour dériver les valeurs d'image d'entrée (E) du signal,

c) un montage de mémorisation (81) dont la capacité de stockage est plus grande que celle nécessaire pour la mémorisation d'une radiographie,

d) des moyens (8; 822) pour générer des valeurs d'image en passe-bas à partir des valeurs d'image d'entrée,

e) des moyens (8; 823, 824) pour dériver des valeurs d'image de compensation à partir des valeurs d'image en passe-bas,

f) des moyens (8; 825) pour superposer les valeurs d'image de compensation et les valeurs d'image d'entrée afin d'obtenir des valeurs d'image de sortie (A), de telle sorte que la valeur d'image de sortie soit, dans le cas de petites valeurs d'image en passe-bas (L) plus grande ou, dans le cas de grandes valeurs en passe-bas (L), plus petite que la valeur d'image d'entrée (E),

g) une unité de reproduction (9) qui reproduit la radiographie conformément aux valeurs d'image de sortie (A).

9. Dispositif suivant la revendication 8,

caractérisé en ce que les moyens destinés à dériver les valeurs d'image de compensation contiennent une mémoire de tables (823) dans laquelle les valeurs d'image de compensation (C) sont mémorisées aux adresses associées aux valeurs d'image en passe-bas (L).

**FIG.1**

**FIG.4**

FIG.2

S

Log. — 821

E

L — 822

824

823 — C(L) ← $C_1 \cdots C_n$

A=E+C — 825

826

# FIG.3

FIG.5

FIG.6a

FIG.6b